# EUROPEAN PATENT SPECIFICATION

(11) **EP 3 989 377 B1**
(45) Date of publication and mention of the grant of the patent: **01.04.2026**
(21) Application number: 20202964.1
(22) Date of filing: 21.10.2020
(51) Int. Cl.: H02G 3/12

(54) **ELECTRICAL MOUNTING DEVICE FOR MOUNTING ELECTRICAL INSTALLATION BOX**
ELEKTRISCHE MONTAGEVORRICHTUNG ZUR MONTAGE EINER ELEKTRISCHEN INSTALLATIONSDOSE
DISPOSITIF DE MONTAGE ÉLECTRIQUE POUR LE MONTAGE D'UNE BOÎTE D'INSTALLATION ÉLECTRIQUE

(43) Date of publication of application: 27.04.2022
(73) Proprietor: Schneider Electric Industries SAS, 92500 Rueil-Malmaison (FR)
(72) Inventor: ANANT NAYAK, Gireesh, 560067 Bangalore (IN); CHIKKANNA, Manohar, 560073 Bangalore (IN); WÄNGSTRE, Håkan, 611 37 Nyköping (SE)
(74) Representative: Swea IP Law AB

(56) References cited:
- EP-A2- 1 719 942
- EP-A2- 2 367 251
- EP-A2- 3 654 474
- FR-A1- 3 083 377
- KR-B1- 100 670 692
- US-A- 1 453 017
- US-A- 2 512 188
- US-A- 3 908 074

## Description

### Field of invention

The present invention relates to an electrical mounting device for mounting electrical installation box. More particularly it relates to a board-fixing member, to be attached with the electrical installation box while mounting on a wall.

### Background of the invention

To mount wiring devices on a wall, electrical installation boxes are used. In current installation system, electrical installation boxes are mounted inside wall made of concrete, wood or Plaster of Paris (POP). The outer most structure of a building is made of concrete, but the inner structure of a building wall is generally made of woods or POP, supported by wooden or metallic beams. Such structural beams come in different shapes in market. The electrical installation boxes are generally mounted on the beams in between two wooden or POP boards by beam-fixing means with the help of nails, screws and/or glue. Once the box is mounted in the wall, fixing frames or other structural parts are mounted on it and electrical wires are drawn out of the box and connected to different electrical modules.

Walls are always constructed in a way that both side of the beam is fixed with the boards. While installing as an installation habit or as per need, installers use single, double or triple boards, tiles etc. at the installation sites. The gaps between the boards are generally kept minimum 90 mm to mount back to back electrical installation boxes. Additionally, these gaps are kept to accommodate thermal structures, heating and cooling channel, to pass electrical conduits/pipes, water pipeline etc.

Beam-fixing means are used when there is beam available to mount the electrical installation box. At present, there are different dimensions of beams available in the market. Generally, these beams come in the sizes like 45, 70, 90 and 120mm. If a builder chooses any of these dimensions, it affects the mounting of the electrical installation box. If the installer mounts multiple installation boxes in line, there can be a bending movement in the assembly due to lack of support. If the location of electrical installation box is such that there is no beam-fixing available, then board-fixing member are used to mount said electrical installation box by using adhesive on to the boards to avoid sliding of box inside the wall for not having proper support.

In the existing mounting system, the board-fixing member, if available, has the following drawbacks:
- no existing provision for modularity in said board-fixing members,
- board-fixing members are adjusted to level the electrical installation box by cutting said board-fixing members and using adhesive, which in difficult to assemble and disassemble,
- after cutting away the board-fixing member the gluing area also decreases,
- absence for any provision for supporting concrete bracket member,
- no universal board fixing option for different dimensions of beams.

With a view therefore to overcome the problems associated with the existing mounting systems of electrical installation box, the inventors felt the need to develop a novel mounting system for electrical installation box. Present invention proposes to provide a solution to the existing drawbacks by providing a novel board-fixing member to the mounting system for electrical installation box.

EP2367251 A2 discloses a holder (9) has a socket (1) fixed at a wall or a switching board. An attachment units (2) are mounted at a guiding tube (11) via an insertion opening (21) of the attachment units. The socket has a tube connector (15) for lateral guiding of an electrical cable into the guiding tube, where passage between the tube connector and the guiding tube is formed by an elbow tube (18), which exhibits average curvature radius of 3 or 4 cm at an outer side of the inner wall. A deflection element is inserted into the socket in a detachable manner.

US3908074 discloses a device for supporting and stabilizing an electrical outlet junction box comprising a unitary styrofoam supporting block having an indented channel disposed along one lateral face, an adhesive means for attaching the styrofoam block to the junction box back and a supporting bar adhesively attached to the junction box and disposed through the styrofoam block channel, the bar acting to laterally support the junction box between supporting wall studs. The device is coupled to the junction box when the box is mounted in a wall by adhesively attaching the pre-cut styrofoam block so that the junction box is supported by the styrofoam block to the adjacent back wall portion while the lateral support bar is cut and sized to rigidly support the junction box laterally between the wall studs.

US 1453017 discloses a wall bridge for switches. etc., comprising a pair of wall-engaging members one member having blocks or shoes at its ends to bear against the inner face of the wall and span a hole in the wall made for the reception of the switch box, the space between the blocks or shoes being adapted to form a seat for said box, the other member being also adapted to bear against the inner face of the opposite wall, and means for adjustably and detachably connecting the two members to cause the same to frictionally engage the opposed inner faces of the same wall and support the bridge in position.

US2512188 discloses an out-let box support comprising a spreader clamp for strutting the front and back walls of a wall space with said clamp and said box, said clamp having fastening means engageable with the rim of a knock-out opening in the rear wall: of the box.

KR100670692 discloses a spring sealing structure of a reclaiming electric supply box for an apartment house is provided to apply elastic force of a spring toward an inner plane of a cast in a concrete curing process by preventing the spring from being buried in the concrete. A front reinforcing rod fixing plate and a rear reinforcing rod fixing plate are connected by a bolt and a nut. A rectangular guide hole is formed in the center of a sleeve formed in front of a cross fixing plate. A rectangular slide shaft is installed in the rear of an electric supply box fixing plate. A compression spring is intervened between the electric supply box fixing plate and the cross-fixing plate. A spring accommodation cylinder accommodates the compression spring. A strip cover inserted with a cutting part is arranged circularly on the end part of a cylindrical cover, and an elastic connection part is formed at the end of the strip cover. And a wire connection groove is formed at the outer circumference of the elastic connection part.

EP3654474 discloses a an electrical installation box assembly for installation of electrical wiring devices, said electrical installation box assembly comprises an electrical installation box provided with a beam fixing element and at least one threaded area, mounted into a wall by said beam fixing element; a screw ring, provided with at least one threaded area and a lid, to be assembled with said screw ring and thereafter mounted within said electrical installation box. Said lid is provided with torsional support ribs to removably engage with locking projections provided in said screw ring so that said screw ring is rotated and/or pulled or pushed of said electrical installation box to adjust the position of said screw ring.

### Summary of the invention

Accordingly, the present invention provides an electrical mounting device for mounting an electrical installation box according to claim 1.

According to the invention the board-fixing member is provided with a receiving hole at the center of said second surface for engaging a height adjustment member, wherein said height adjustment member comprises:
- a mounting bracket member provided with fastener receiving means to mount said height adjustment member on the wall and a threaded receiving slot; and
- a pole member having helical grooves, wherein one end of the pole member is removably engaged with said receiving hole provided in said board-fixing member, and another end is removably engaged with the threaded receiving slot of said mounting bracket member to rotate said pole member and thereby adjust the level of the electrical installation box.

Preferably, said receiving hole for engaging said pole member is circular in shape and said pole member is press-fitted into said receiving hole.

According to a second preferred embodiment of the invented electrical mounting device for mounting an electrical installation box, said electrical mounting device comprises at least two board-fixing members, wherein each of said board-fixing members having more than one mating surfaces with unequal dimension, wherein each of said mating surfaces is provided with locking protuberances to removably engage with the receiving means on said electrical installation box and/or with the receiving means on the opposite surfaces of said mating surfaces of another board-fixing member.

Preferably, said locking protuberances are cantilever snaps which can be disengaged from said receiving means, by compressing said snaps to deflect reversibly and come off the receiving means.

Preferably, said board-fixing member is in the shape of rectangular prism having two mating surfaces.

Alternatively, said board-fixing member is in the shape of hexagonal prism having three mating surfaces.

The board-fixing members may be provided with strengthening ribs disposed along an axis of said board-fixing members.

According to a third preferred embodiment of the invented electrical mounting device for mounting an electrical installation box, said board-fixing member is made out of resilient material, and provided with flexible arms, adapted to deflect reversibly for filling up the gap between the board and wall.

Advantageously, said board-fixing member is engaged with an adjustment fixture, made out of resilient material and configured to deflect reversibly, when pushed against the board in order to fill in the gap between the wall and the board.

Preferably, said locking portions are provided with the first surface of said board-fixing member are pivotally mounted on a distal edge of said first surface and extending therefrom to removably engage with the receiving slots on the mating surface of said electrical installation box or with the receiving means extending from a distal edge of the second surface of said board-fixing member.

According to one object of the invention, gripping means are disposed at top surface of each of said lifting arms to facilitate a fictional attachment and detachment of said locking portion such that a predetermine force is required to detach said board-fixing member.

Preferably, said locking portions, provided on the first surface of said board-fixing member are disengaged from the receiving means by pressing a lifting arm provided on the opposite end of said locking portions mounted by pivot on a distal edge of said first surface.

Advantageously, said second surface of said board-fixing member is provided with guiding slots to receive guiding projections provided on the first surface of said board-fixing member for docking multiple board-fixing members.

The fastener receiving slots may be provided at the second surface of said board-fixing member for nailing/screwing with the board and hold said electrical installation box robust.

Preferably, said first surface and second surface of said board-fixing member is plane-shaped for gluing with the wall and/or mating surface of said electrical installation box.

These and other objects, features and advantages of the present invention will become apparent to those skilled in the art upon reading and understanding the detailed description of the invention set forth below taken in conjunction with the drawings.

### Brief description of the drawings

For better understanding of the invention, illustrative embodiments will be discussed further with reference to the accompanying drawings, wherein
Figures 1(a) and 1(b) depict the mounting elements for installing an electrical installation box.
Figures 2(a) and 2(b) depict the perspective view of front side and back side of the electrical installation box respectively.
Figure 3(a) illustrates a first embodiment of the installation of electrical installation box with the board-fixing member from one side.
Figure 3(b) illustrates a first embodiment of the installation of electrical installation box with the board-fixing member from another side.
Figures 4(a) and 4(b) depict the front side and back side perspective view of the electrical installation box respectively with a first embodiment of the board-fixing member mounted on it.
Figure 5(a) illustrates the installation of the board-fixing member on the electrical installation box from one side according to a first preferred embodiment of the invented electrical mounting device.
Figure 5(b) illustrates the installation of a first preferred embodiment of the board-fixing member on the electrical installation box from another side.
Figures 6(a) and 6(b) depict the perspective view of first preferred embodiment of the board-fixing member from back and front side.
.Figure 7(a) depicts two beam-fixing members attached with electrical installation boxes and aligned by means of coupling member according to the first embodiment of the invented electrical mounting device.
.Figure 7(b) depicts multiple beam-fixing members horizontally aligned by means of coupling member according to the first embodiment of the invented electrical mounting device.

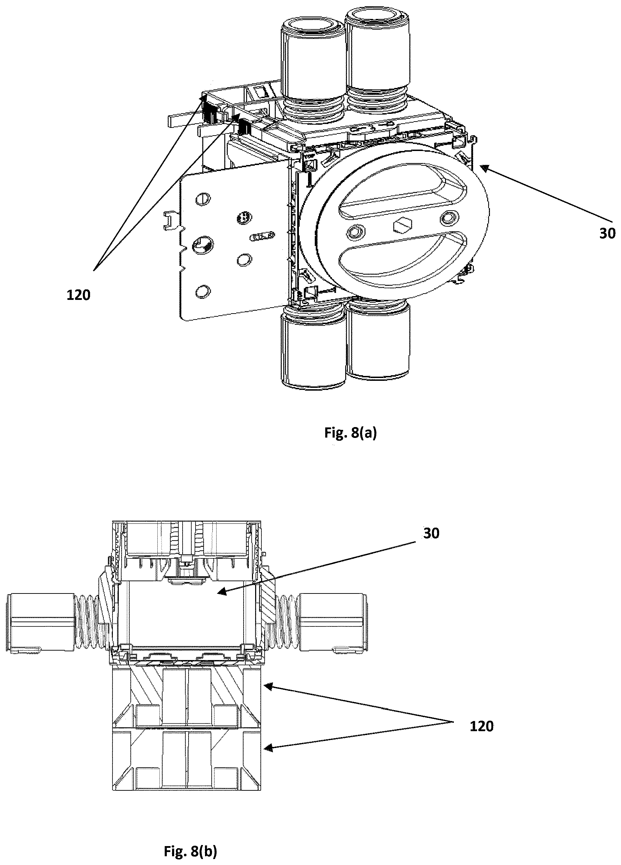

Figures 8(a) and 8(b) illustrated a multiple board-fixing members attached with each other to adjust the installation box for different beam dimensions.

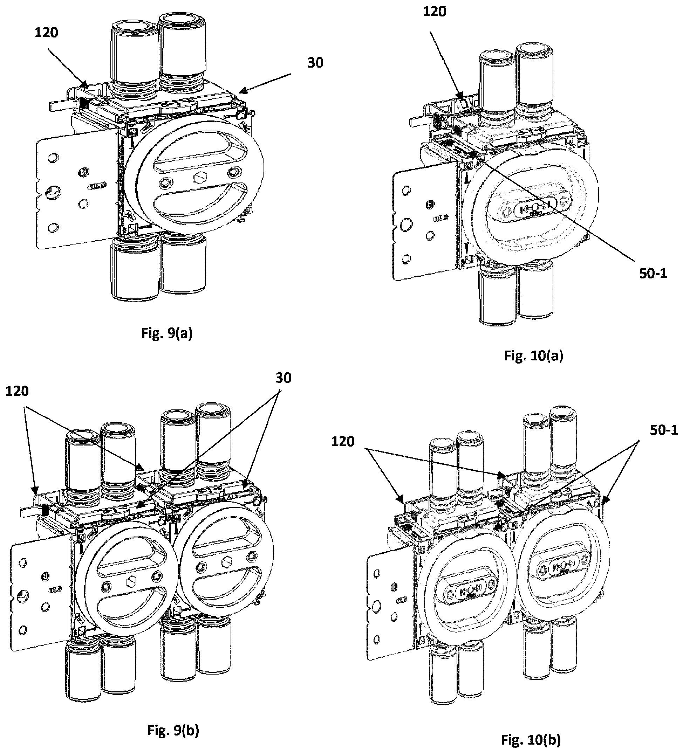

Figures 9 (a) and 9 (b) depict the application of the board-fixing member to mount a single gang modular installation box and their combinations according to the first embodiment of the invention.

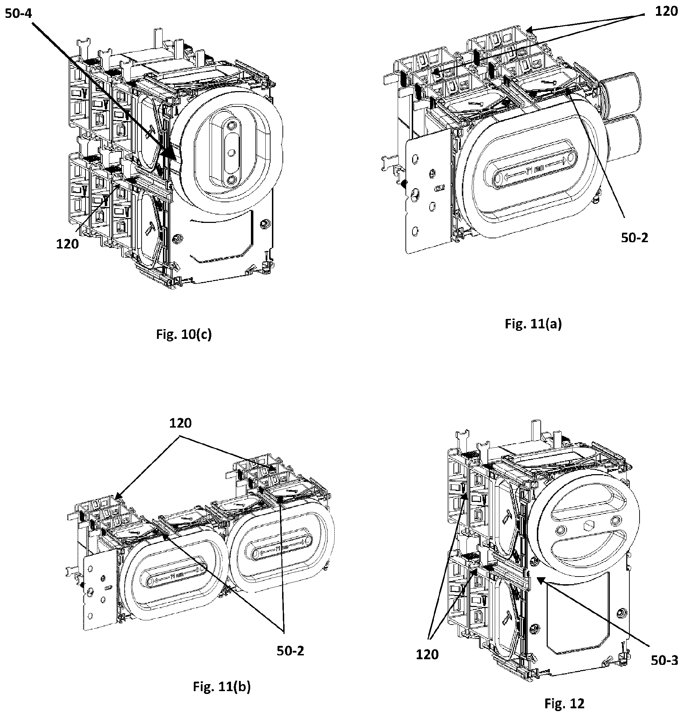

Figures 10 (a), 10(b) and 10 (c) depict the application of the board-fixing member to mount a 1.5 gang modular installation box and their combinations according to the first embodiment of the invention.
Figures 11 (a) and 11 (b) depict the application of the board-fixing member to mount a double gang modular installation box and their combinations according to the first embodiment of the invention.
Figures 12 to 14 depict the application of the board-fixing member to mount multiple ganged installation boxes having different lids features according to the first embodiment of the invention.

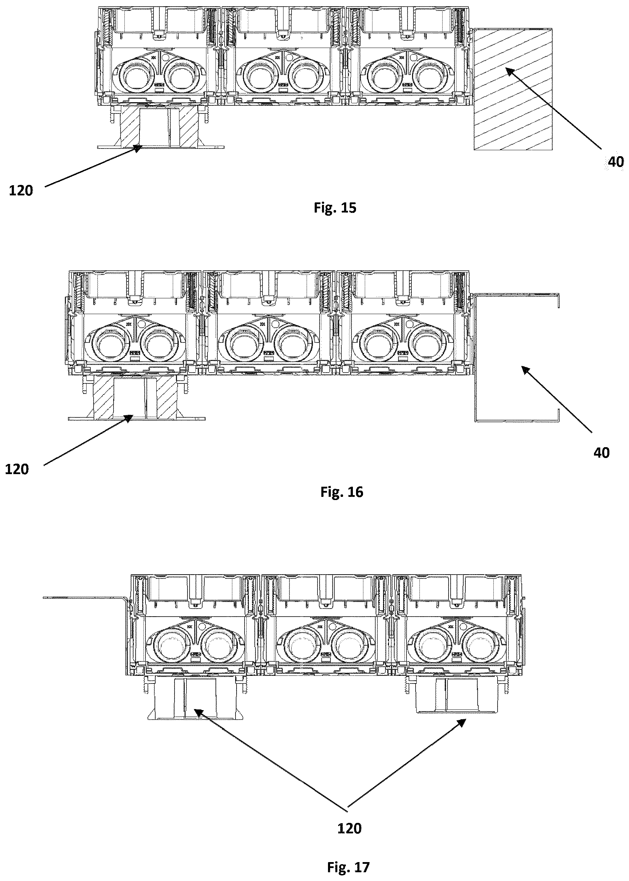

Figures 15 to 17 illustrate the docking of the installation boxes by attaching the board-fixing member according to the availability of fixing beams.

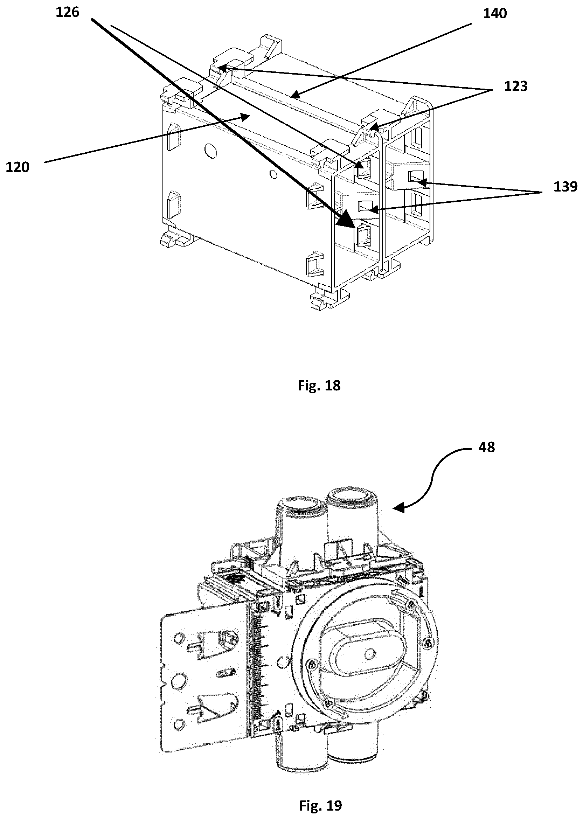

Figure 18 depicts the perspective view of two board-fixing members docked together according to a first preferred embodiment of the invention.
Figure 19 depicts the perspective view of the electrical installation box with board-fixing member mounted on it according to a first preferred embodiment of the invention.

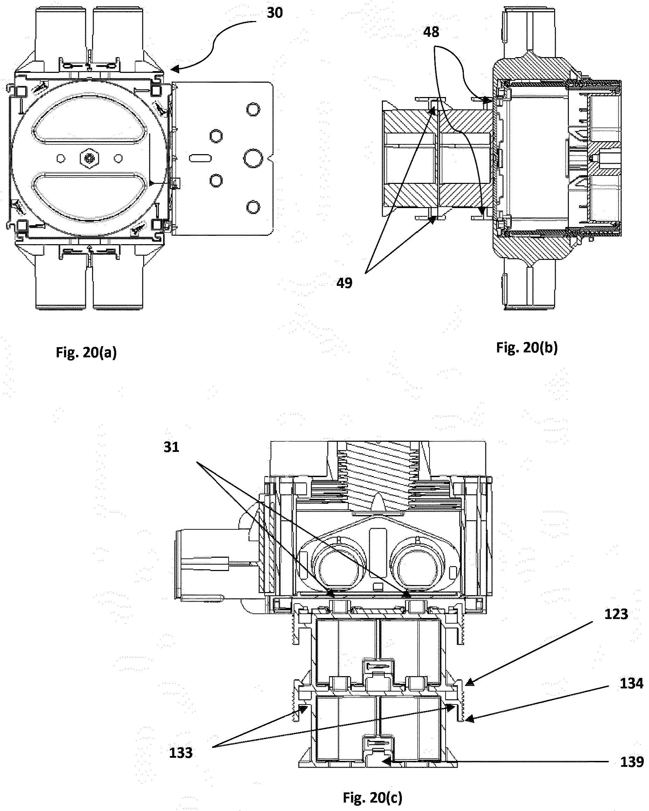

Figures 20(a) and 20 (b) depict the front view and cross-sectional side view of the electrical installation box with two board-fixing members mounted on it according to a first preferred embodiment of the invention.
Figure 20 (c) depicts cross-sectional side view of a first preferred embodiment of the invented electrical mounting device showing the locking between two board-fixing members mounted on an electrical installation box.

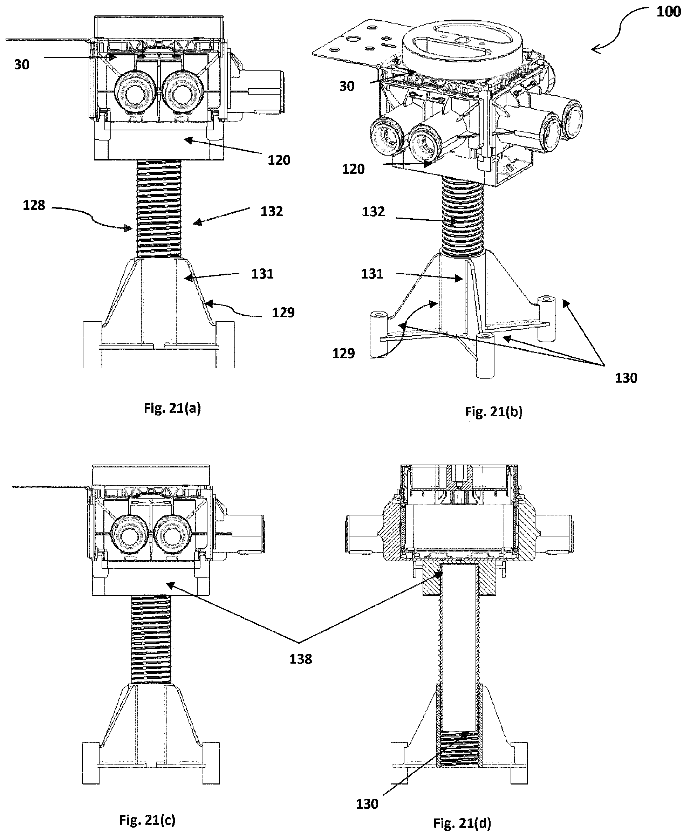

Figures 21(a), 21(b) and 21(c) depict the side and perspective view of the electrical installation box with height adjustment member connected to the board-fixing members according to a first preferred embodiment of the invention.
Figure 21(d) depicts the cross-sectional side view of the electrical installation box with height adjustment member connected to the board-fixing member.

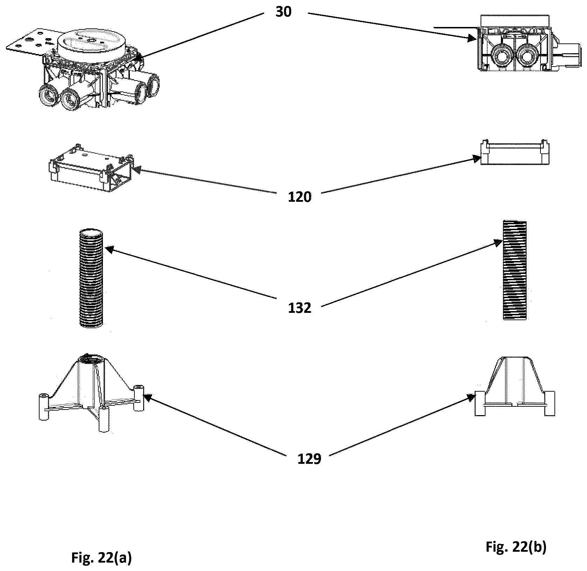

Figures 22(a) and 22(b) depict the top perspective view and the side view of components of the invented electrical mounting device.

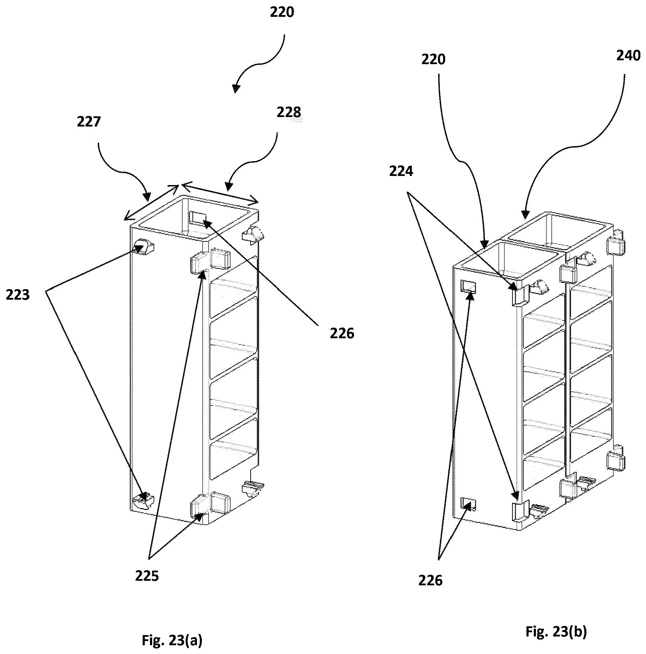

Figures 23(a) and 23 (b) depict perspective view of a second preferred embodiment of the board-fixing member.

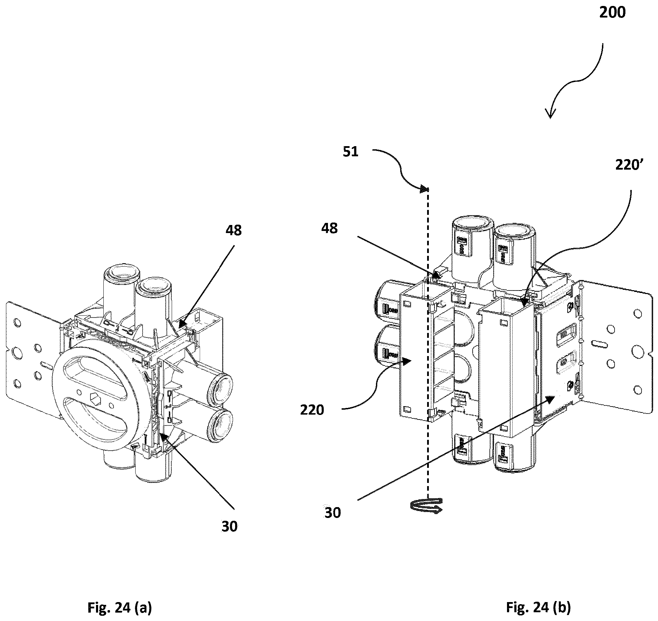

Figures 24(a) and 24(b) depict the perspective view of the electrical installation box with the board-fixing members attached to the electrical installation box according to a second preferred embodiment of the invention.

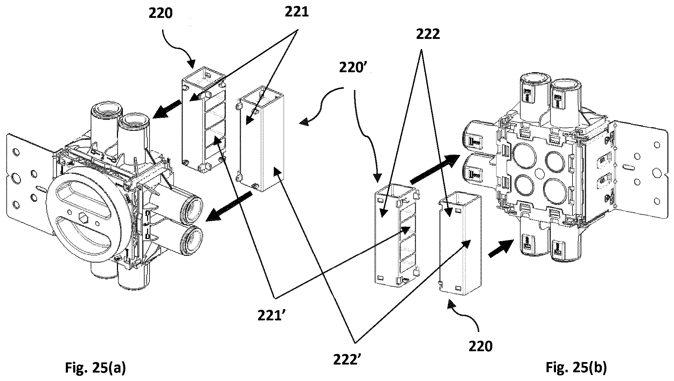

Figures 25(a) and 25(b) illustrate the mounting of the first dimensional surface of board-fixing members on the electrical installation box from two different sides according to a second preferred embodiment of the invention.

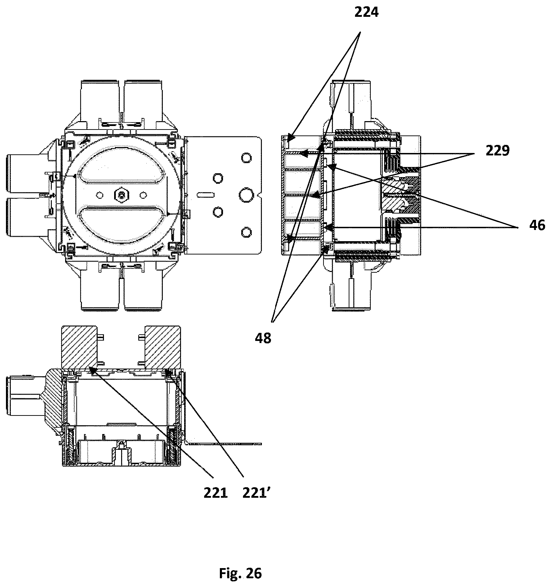

Figure 26 depicts the front view, side view and top view of the electrical installation box with the board-fixing members mounted on it, according to the second preferred embodiment of the invention.

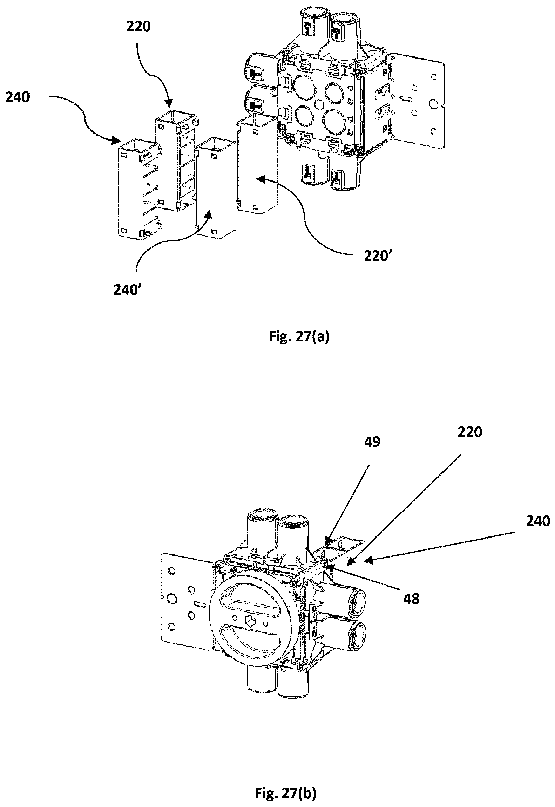

Figures 27(a) and 27(b) depict the back side and front side perspective view of four (as a combination of two) board-fixing members mounted with the electrical installation box, according to the second preferred embodiment of the invention.

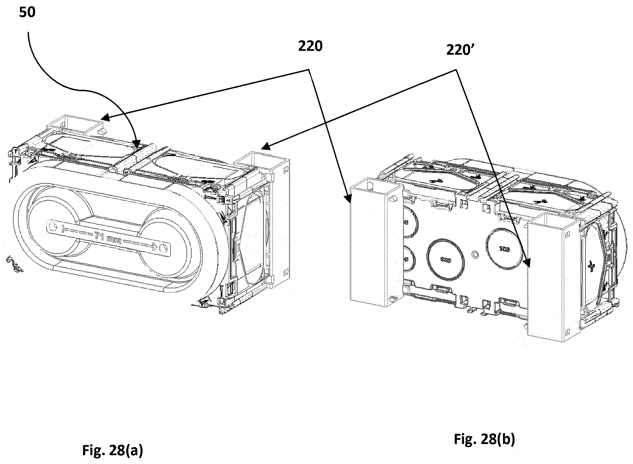

Figures 28(a) and 28(b) depict the front side and back side perspective view respectively of a multi-ganged electrical installation box with board-fixing members mounted on it according to a second preferred embodiment of the invention.

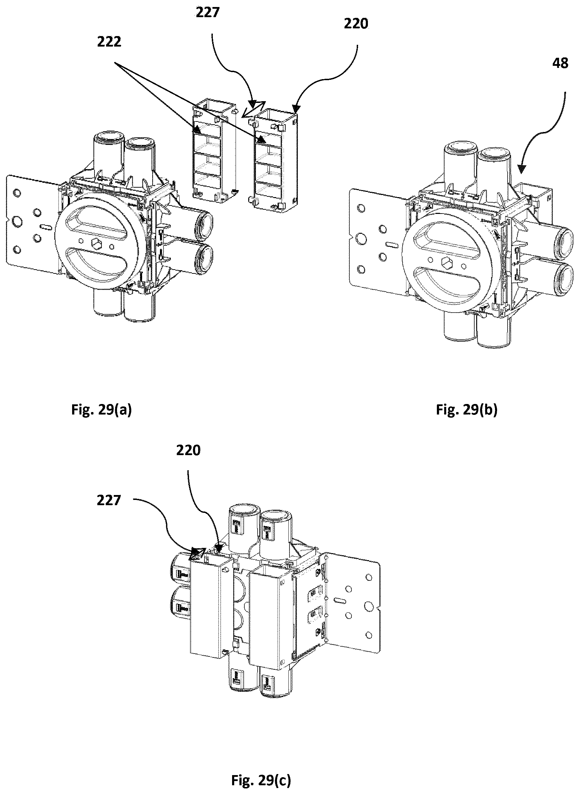

Figures 29(a), 29(b) and 29(c) illustrate the mounting of the second dimensional surface of board-fixing members on the electrical installation box from two different sides according to a second preferred embodiment of the invention.

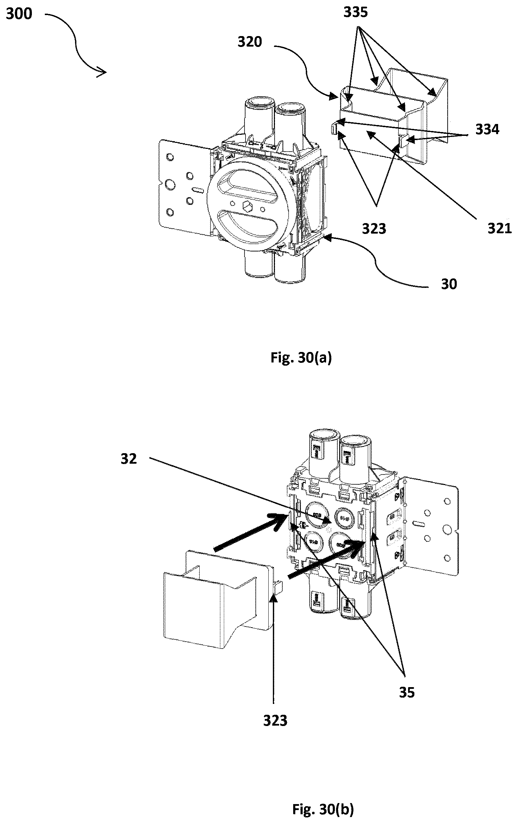

Figure 30(a) depicts the perspective view of a third embodiment of board-fixing member to be mounted on electrical installation box from one side.
Figure 30(b) depicts the perspective view of a third embodiment of board-fixing member to be mounted on electrical installation box from one side.

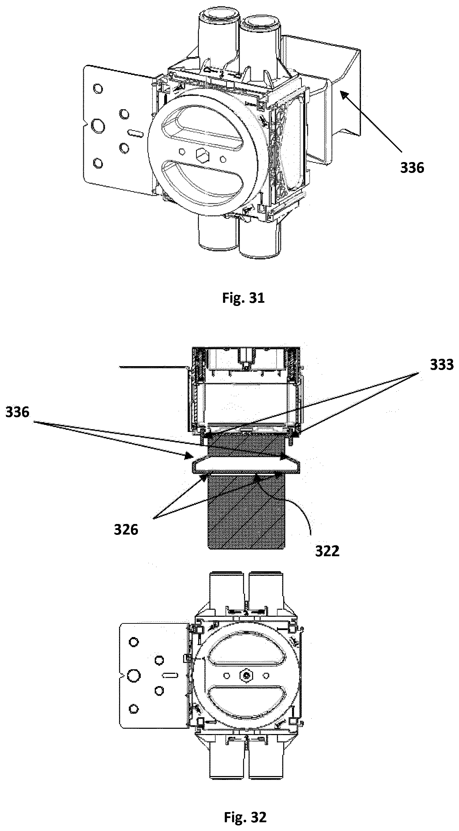

Figure 31 depicts the perspective view of the electrical installation box with the board-fixing member mounted on it, according to the third preferred embodiment of the invention.
Figure 32 depicts the top and the front view of the electrical installation box with the board-fixing members mounted on it, according to the third preferred embodiment of the invention.

### Detailed description of the invention

In the following, numerous specific details are set forth to provide a thorough description of various embodiments.

Like numbers refer to like elements throughout.

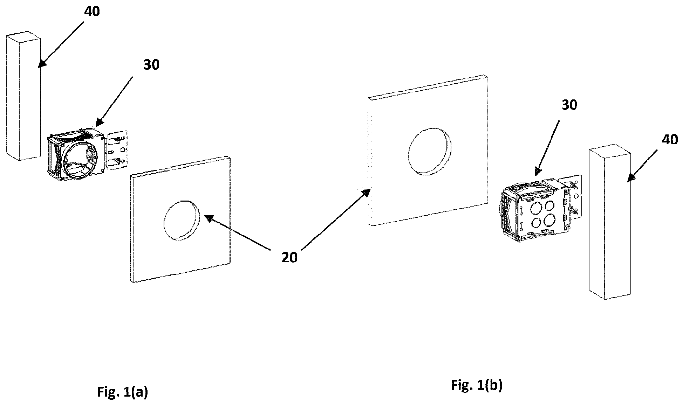

Referring to figures 1(a) and 1(b) of the accompanying drawings, an electrical installation box (30) is nailed with a wooden or metallic beams (40) and mounted inside the wall (20) by means of a beam-fixing member (36), generally attached with said electrical installation box (30) with beam-fixing legs.

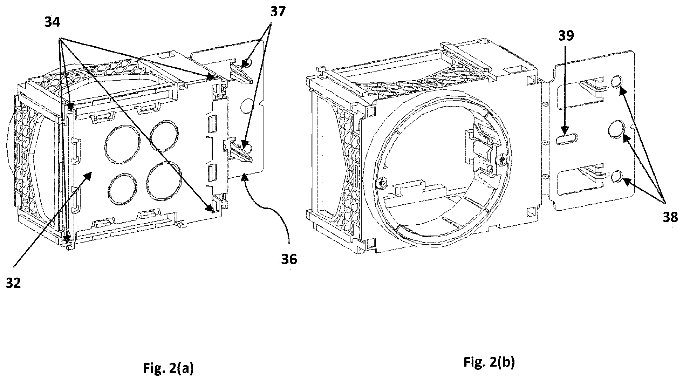

Said beam-fixing member (36) is provided with self-nailing element (37), screw holes (38) and additional nailing slots (39) to take in mechanical fasteners to attach said electrical installation box (30) with the beam (40) and mount inside the wall (20), as depicted in figures 2(a) and 2(b).

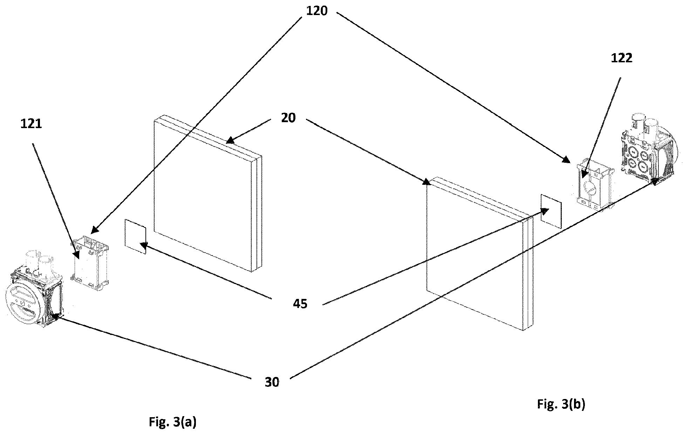

The invention herein, addresses the problem of not having a beam (40) available for nailing the electrical installation box (30) and provides an electrical mounting device (100, 200, 300) to mount an electrical installation box (30) on the wall. Said electrical mounting device (100, 200, 300) comprises an electrical installation box (30) and at least a board-fixing member (120, 220, 320); wherein, said electrical installation box (30) is to be removable engaged with said board-fixing member (120, 220, 320) and thereafter attached to a wall (20), generally by means of a double sided glue tape (45) or glued direct with said wall (20). The installation, according one embodiment is illustrated in figures 3 (a) and 3(b) from back side and front side of the wall (20) respectively.

One mating surface (32) of said electrical installation box (30) is provided with receiving means (34, 35) (shown in figure 2(a)) at the distal edges of said electrical installation box (30) to engage with said board-fixing member (120,220,320).

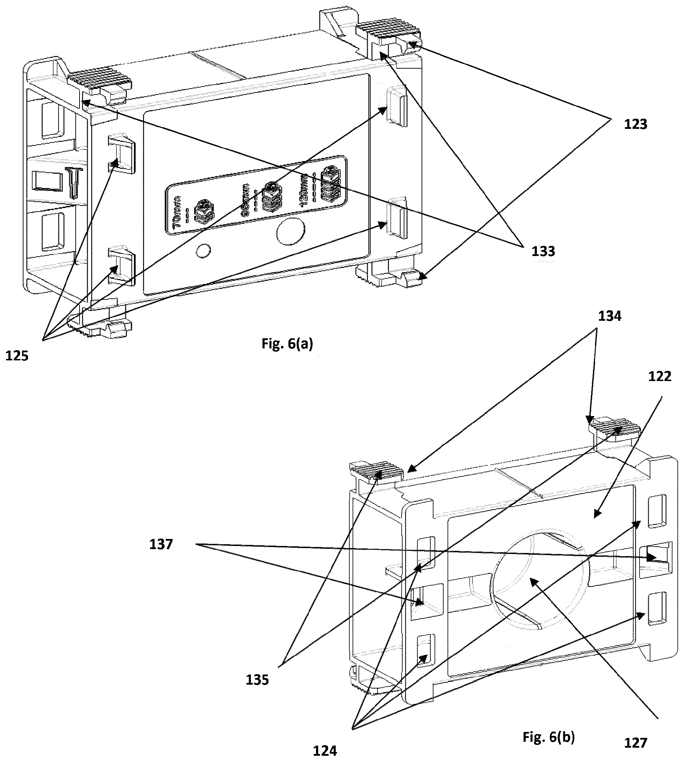

According to the invention a first surface (121) of said board-fixing member (120) is provided with locking portions (123) in form of hook shaped members (123), pivotally mounted on distal edges of said first surface (121). Preferably, four such locking portions (123) are provided at four distal corners of said first surface, pivoted and extending therefrom. This is shown in figure 6 (b) of accompanying drawings.

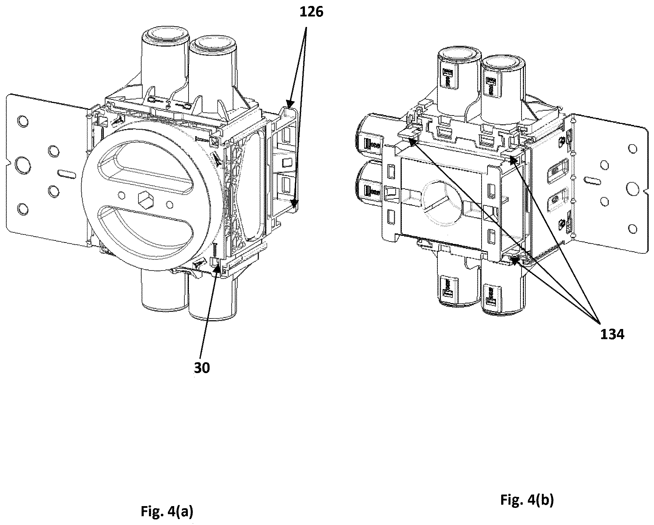

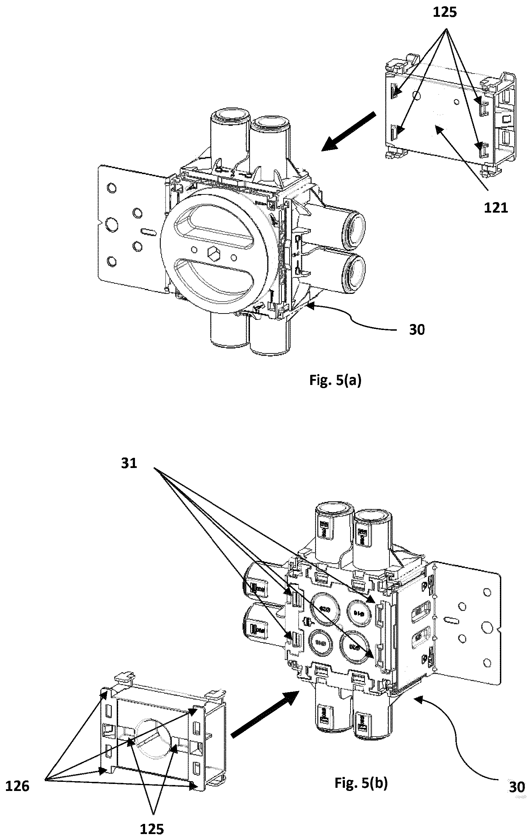

Figures 4(a) and 4(b) show the board-fixing member (120) installed on the mating surface (32) of said electrical installation box (30). Said locking portions (123) are adapted to removably engage with said receiving means (34) on the mating surface of said electrical installation box (30). In this preferred embodiment said hook-shaped members (123) is clipped to the receiving means (34). Additionally, said first surface (121) of the board-fixing member (120) is provided with guiding projections (125), protruding from the same. The guiding projections (125) are received by guiding slots (31) provided on the mating surface (32) of said electrical installation box (30), for easy installation. The installation of the board-fixing member (120) on said electrical installation box (30) is illustrated in figures 5(a) and 5(b).

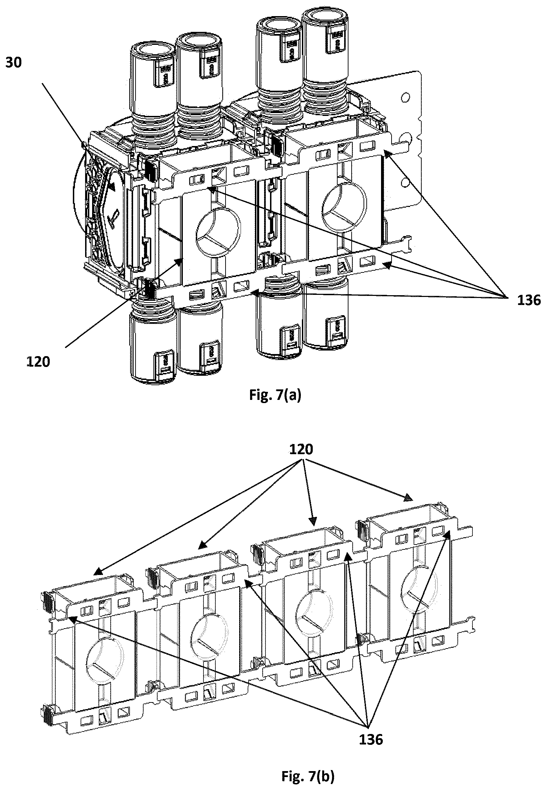

Referring to figures 6(a) and 6(b) of the accompanying drawings, a second surface (122) of the board-fixing member (120) is provided with
- guiding slots (124) for receiving the guiding projections (125) of the first surface (121) of another board-fixing member (140) (shown in figure 7);
- receiving hole (127) for fixing a height adjustment member (128) (shown in figure 21 (a)) by press fit; and
- bracket locking slots (137) for robust fixing with said height adjustment member (128).

In figure 7, the modularity in installation of board-fixing member (120) is shown. After a first board-fixing member (120) is mounted on the electrical installation box (30) (shown in figures 4(a) and 4(b)), a second board-fixing member (140) can be removably attached with said first board-fixing member (120). The locking portions (123) on the first surface (121) of the second board-fixing member (120) are engaged with the receiving means (126) on the second surface (122) of the first board-fixing member (120). Preferably, four receiving means (126) are provided at four distal corners of the second surface (122), extending outwardly therefrom.

The first surface (121) of board-fixing member (120) is provided with a lifting arm (134). Preferably, said lifting arm (134), working on a lever mechanism, provided at the opposite end of said locking portions (123) mounted by pivot (133) on a distal edge of said first surface (121), i.e. said pivot (133) is positioned at the center of said lifting arm (134), as shown in figures 6(a) and 6(b). When installer needs to detach any board-fixing member (120) from an electrical installation box (30) or another board-fixing member (140), said lifting arm (134) is pressed in order to disengage said board-fixing member (120) without any cut or break. Thus board-fixing members (120,140) can be attached together in order to fill gap between said board and wall (20) to install the electrical installation box (30). This is depicted in figures 20(a), 20(b) and 20(c).

With reference to figures 6(a) and 6(b) of the accompanying drawings, the top surface of each of said lifting arms (134) is provided with gripping means (135). The gripping means (135) is positioned on the top surface such that it provides additional frictional support to the board-fixing member (120) preventing any slippage. A predetermined force has be applied to overcome the frictional gripping force and disengage said board-fixing member.

According to one preferred embodiment, as illustrated in figures 21(a) to 21(d), a height adjustment member (128) is press fitted (138) with the receiving hole at the second surface (122) of the board-fixing member (120). With reference to figures 22(a) and 22(b), said height adjustment member (128) comprises
- a mounting bracket member (129) provided with fastener receiving means (130) to mount said height adjustment member (128) on the wall (20) and a threaded receiving slot (131); and
- a pole member (132) having helical grooves, wherein on end of the pole member is press-fitted (138) into said receiving hole (127) at the second surface (122) of said board-fixing member (120), and another end is removably engaged with said threaded receiving slot (131) of said mounting bracket member (129).

The radius of said receiving hole (127) is slightly smaller than that of said pole member (132) which is pushed inside said receiving hole (127) and gets press-fitted (138). Once, one end of said pole member (132) is press-fitted (138) into the board-fixing member (120) and another end in the threaded receiving slot (131) of said mounting bracket member (129), the gap between the wall (20) and board is taken care of. The helical grooved pole member (132) is rotated while engaged with said threaded receiving slot (131) and thereupon distance between said mounting bracket member (129) and electrical installation box (30) is varied. The range of variation can be easily changed by increasing the threaded receiving slot (131) of said mounting bracket member (129).

The second surface (122) of said board-fixing member (120) is further provided with coupling member to keep the adjacent board-fixing members in-line with each other and thereby keeps the adjacent electrical installation boxes aligned for multiple box installments. As seen in figures 7(a) and 7(b) at least two coupling members formed in strips are disposed at the top portion and bottom portion of said second surface (122).

According to one prefer embodiment as shown in figure 7(b), the coupling members (136) are provided with U-shaped teeth at both ends to mate with the ends of their immediate adjacent coupling member. The coupling members can be attached with the second surface in both axial and vertical direction with respect of the board fixing member by. Multiple board-fixing members can be aligned in-line with each other in a axial or vertical direction as shown in figure 7(b). Further, a pitch length is defined between two adjacent installation boxes by attachment of two adjacent coupling member (136). The pitch length can be varied by varying the length of the strips of the coupling member (136).

Figures 8(a) and 8(b) illustrated the solution to the mounting of the installation box of various beam dimensions. A first beam-fixing member (120) is attached with an installation box and further beam-fixing members are attached to match the height of the beam. This solution can be applied for single gang box and larger space one gang boxes the board fixing arrangement as illustrated in figures 9(a) to 12. The board fixing will give the modular support to the installation or flush junction box to withstand internal or external forces coming while wall construction or while installing the electrical fittings on the installation box and after installation to withstand pull and push forces.

The board-fixing member is used to mount single gang (30), 1.5 gang (50-1), double gang (50-2) and its combinations. For one gang and 1.5 gangs same number of board-fixing members are used to achieve different dimensions of beams which is illustrated in figures 9(a) to 11(b). Further, bigger installation boxes (50-3) can be mounted in a similar manner with said beam-fixing member (120).

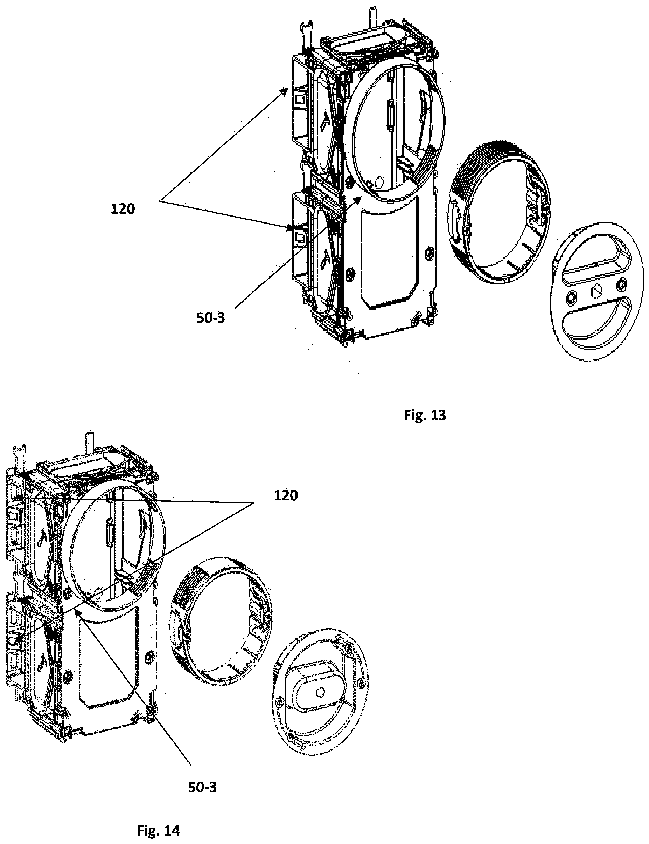

In case of two gang (50-2) and two gang big box installation with 70mm beam system (40) uses 2 board-fixing members (120) which are aligned and arranged at 71mm pitch for 95mm beam installation 4 board-fixing members (120). For 120mm beams 6 board-fixing members are used as illustrated in figures 10(c), 11(a) and 11(b). The combination is common for large one gang (50-3) and large 1.5gang boxes (50-4) also. But large one gang box (50-3) consists of telescopic and threaded ring assembly and 1.5 gang large or big box is using normal 1.5gang lid as illustrated in figures 13 and 14. For multi gang installation it reduces the number of usages of board fixing elements in an assembly. In any number of box configurations two board-fixing members (120) are used both the consecutive end installation boxes. For example, two or more gang installation for 70mm beam two board fixings are used, for 95mm beam 4 beam fixings are used at extend end boxes (two each sides) and for 120mm beams 6 board fixing elements are used (3 each) at extreme ends.

With reference to figures 15 to 17, the board-fixing members (120) are also used multi gang versions with one side beam support (40) and other side board fixing members (120) are used to support the installation box and avoid the moment and deflection of the installation box and give proper support. The beam (40) can be made of wood or metal and for attaching additional installation box. In the places where no beams are available additional beam-fixing members (120) are to be attached with the installation boxes (30) as seen in figure 17.

With reference to figures 23(a) and 23(b) of the accompanying drawings, in a second embodiment of the invented electrical mounting device (200), the board-fixing member (220) is provided with two different mating surfaces (221,221') having different dimensions (227,228). The board-fixing member (220) in this particular embodiment is rectangular prism in shape. Each of said mating surfaces (221,221') is provided with locking protuberances (223) to removably engage with the receiving means (46) provided on the mating surface (32) of said electrical installation box (30). In this particular embodiment, two board-fixing members (220,220'), identical to each other, are mounted on the electrical installation box (30). Identical surfaces are butt on the mating surface (32) of the electrical installation box (30), as depicted in figures 24(b) and 26 of the accompanying drawings.

Opposite surfaces (222,222') of said mating surfaces (221,221') of said board-fixing member (220) in provided with receiving means (226) adopted to receive the locking protuberance (223) of said mating surfaces (221,221'). Said surfaces ((221,221') and (222,222')) are identical to each other. With this feature, said board-fixing members (220,240) can be docked together to achieve the dimension required to fill the gap between the wall (20) and the board. Since said board-fixing member (220) is provided with two different dimensions (227,228) due to its rectangular prism shape, we can have 5 combinations of dimension if four (in pairs) board-fixing members ((220,220'),(240,240')) are used (shown in figure 27(a)).

Preferably, the locking protuberances (223) provided in said board-fixing member (220) are cantilever snaps for easy engaging and disengaging with the receiving means (226). For disengaging said locking protuberance (223) from the receiving means (226, 46), said cantilever snaps are slightly compressed. Thus board-fixing member (220) is easy to mount and demount with said electrical installation box (30) and/or another board-fixing member (240).

With reference to figures 24(a) and 24(b) of the accompanying drawings, the board-fixing member (220) in attached to the electrical installation box (30) with one mating surface (221). In this configuration, the functional dimension is a first dimension (227). To use the other dimension(s) (228), said board-fixing member (220) is to be engaged with said electrical installation box (30) after rotating 90_{°}about an axis (51). The process of engaging said board-fixing member (220,220') with said electrical installation box (30) is illustrated in figures 25(a) and 25(b) with said first dimension (227) in function.

Advantageously, strengthening ribs (229) are disposed along said axis (51) of the board-fixing member (220). These ribs (229) provide stability and stiffness to the board-fixing member (220), while mounting said electrical installation box (30) on a wall (20) and bear the weight of the components or electrical conduits assembled or placed with said electrical installation box (30). This has been depicted in figure 26 of the accompanying drawings.

Referring to figures 23(a) and 23(b) of the accompanying drawings, a second surface (222,222') of both the board-fixing members (220,220') is provided with guiding slots (224) for receiving the guiding projections (225) of the first surface (221,221') of another board-fixing member (240,240').

As mentioned earlier, more than one board-fixing members (220,240) can be docked together to achieve the required dimension to fill up the gap between the board and wall (20). One mating surface (221) of a first board-fixing member (240) is docked with a second board-fixing member (220) by attaching the locking protuberance (223) provided at said mating surface (221) of said first board-fixing member (240) with the receiving means (226) provided at said opposite surface of second board-fixing member (220). These two board-fixing members (240,220) thereafter mounted on said electrical installation box (30) by means of the locking portions (223) provided on the mating surface (221) of said second board-fixing member (220). The combination of four such board-fixing members (in pairs) ((220,220'), (240,240')) is illustrated in figures 27(a) and 27(b). Figure 27 (b) depicts two board-fixing members (220,240) docked together (49) and attached (48) to said electrical installation box (30).

With reference to figures 28(a) and 28(b) of the accompanying drawings, the invented electrical mounting device (200) can be used for mounting multi-ganged electrical installation boxes (50) on a wall (20). Since two of the board-fixing members (220,220') are identical to each other and can be attached to said multi-ganged electrical installation boxes (50) without any restriction of separation between them. Therefore ganged electrical installation box having any number of electrical installation boxes (30) can be easily mounted on the wall (20) with this particular embodiment of said beam-fixing member (220,220').

Figures 29 (a) to 29(c) of the accompanying drawings illustrate a second mating surface (222) of the board-fixing member (220), having a second dimension (228), removably attached to the electrical installation box (30). As mentioned earlier, said second dimension (228) is different from the first dimension (227), which is used to achieve the dimension required to fill the gap between the wall (20) and the board. The second mating surface (222), if attached to the first mating surface (221) of said board-fixing member (220) then a third dimension is achieved (not shown).

According to another preferred embodiment of the board-fixing member (not shown), the shape of said board-fixing member is of hexagonal prism, instead of rectangular prism. The board-fixing member in this embodiment has a total of three sets, mating surfaces and each having different dimensions. Thus if four of these board-fixing members (in pairs) docked with each other while engaging with the electrical installation box, different combination of dimensions can be used to obtain different dimensional adjustment. In a similar way one can use octagonal shape and so on to achieve multiple dimensional variations, which falls under the scope of this particular embodiment of the invented electrical mounting device (200).

A third embodiment of the invented electrical mounting device (300) for mounting electrical installation box (30) is depicted in figures 30(a) to 32 of the accompanying drawings. In this particular embodiment, board-fixing member (320) is made out of resilient material. The board-fixing member (320), having a first surface (321) and a second surface (322), is provided with flexible arms (335) adopted to deflect reversibly in order to fill up the gap between the board and the wall (20). Further, said board-fixing member (320) is provided with locking portions (323) pivoted on distal edge of said first surface (321). Preferably, in this particular embodiment, two locking portions (323) are provided at the distal part of the sides of said first surface (321) placed symmetrically opposite to each other. The locking potions (323) are removably attached to the receiving means (35) provided at the mating surface (32) of said electrical installation box (30).

As depicted in figure 30 (a) of the accompanying drawings, a lifting arm (334) is provided at the opposite end of each of said locking portions (323), mounted by pivot (333) on a distal edge of said first surface (321). The locking portions (323) can easily be disengaged from the receiving means (35 or 326) of said electrical installation box (30) or another board-fixing member (not shown) by pressing said lifting arm (334), in a likely manner as first embodiment of the invented electrical mounting device (100).

Advantageously, an adjustment fixture (336), made out of resilient material in engaged with the receiving means (326) at the second surface (322) of said board-fixing member (320). Said adjustment fixture (336) can be easily cut, as per the need and then attached to said board-fixing member (320). In addition, said adjustment fixture (336) can also reversibly deflect in sides to achieve required dimension to fill the gap between the board and wall (20). This feature is depicted in figure 32 of the accompanying drawings.

The second surface (122, 222,322) of the board-fixing member (120,220,320) can be glued to the wall (20) or attached to the wall (20) by a double sided glue tape (45). Often due to the glue or glue tape (45) there is a definite width variation which affects the installation of the electrical installation box (30). Advantageously, the second surface (122,222,322) of said board-fixing member (120,220,320) is provided with fastener receiving slots (139) (shown in figures 18 and 20(c)), for screwing said board-fixing member (120,220,320) with the wall (20). This feature will make sure that without any extra variation in dimension, the board-fixing member (120,220,320) will fixed robust on the wall (20).

## Claims

1. An electrical mounting device (100,200,300) for mounting an electrical installation box (30), comprising
- at least one board-fixing member (120,220,220',320) having a first surface (121, 221, 221', 321) and a second surface (122, 222, 222', 322);
- a height adjustment member (128); and
- an electrical installation box (30) having a mating surface (32) provided with receiving means (34,35) at distal part of said mating surface (32) to removably engage with said board-fixing member (120, 220, 220', 320),
wherein said first surface (121, 221, 221', 321) is provided with locking portions (123, 223, 323) to removably engage with at least one of said receiving means (34,35,46), provided on the mating surface (32) of said electrical installation box (30); and
wherein said second surface (122, 222, 222', 322), is provided with
- receiving means (126,226,326) to removably engage with another board-fixing member (140,240,240',340) for filling in the gap between board and wall (20) to mount electrical installation box (30); and
- coupling member (136), releasably attached with said second surface (122), to contact an adjacent coupling member (136) for vertical and/or horizontal alignment of adjacent board fixing members (120) and thereby maintaining a predefined pitch and spacing between adjacent installation boxes (30), **characterized in that**
- said locking portions (123,223,323) are in form of hook shaped members (123), pivotally mounted on distal edges of said first surface (121),
- said board-fixing member (120) is provided with a receiving hole (127) at the center of said second surface (122) for engaging the height adjustment member (128), wherein said height adjustment member (128) comprises:
- a mounting bracket member (129) provided with fastener receiving means (130) to mount said height adjustment member (128) on the wall (20) and a threaded receiving slot(131);
- and a pole member (132) having helical grooves, wherein one end of the pole member (132) is removably engaged with said receiving hole (127) provided in said board-fixing member (120), and another end is removably engaged with the threaded receiving slot (131) of said mounting bracket member (129) to rotate said pole member (132) and thereby adjust the level of the electrical installation box (30).

2. The electrical mounting device (200) for mounting an electrical installation box (30) as claimed in claim 1, wherein said electrical mounting device (200) comprises two board-fixing members (220,220'), wherein each of said board-fixing members (220,220') having more than one mating surfaces (221,221) with unequal dimension, wherein each of said mating surfaces (221,221') is provided with locking protuberances (223) to removably engage with the receiving means (46) on said electrical installation box (30) and/or with the receiving means (226) on the opposite surfaces (222,222') of said mating surfaces (221,221') of another board-fixing member (240,240').

3. The electrical mounting device (200) for mounting an electrical installation box as claimed in claim 2 wherein said locking protuberances (223) are cantilever snaps which can be disengaged from said receiving means (226,46) by compressing said snaps to deflect reversibly and come off the receiving means (226,46).

4. The electrical mounting device (200) for mounting an electrical installation box (30) as claimed in any of the above claims 2 and 3, wherein said board-fixing member (220) is in the shape of rectangular prism.

5. The electrical mounting device (200) for mounting an electrical installation box (30) as claimed in any of the above claims 2 and 3, wherein said board-fixing member is in the shape of hexagonal prism.

6. The electrical mounting device (200) for mounting an electrical installation box (30) as claimed in any of the above claims 2 to 5, wherein the board-fixing members (220,220') are provided with strengthening ribs (229) disposed along an axis (51) of said board-fixing members (220,220').

7. The electrical mounting device (100) for mounting an electrical installation box (30) as claimed in claim 1, wherein said receiving hole (127) for engaging said pole member (132) is circular in shape and said pole member (132) is press-fitted into said receiving hole (127).

8. The electrical mounting device (300) for mounting an electrical installation box (30) as claimed in claim 1, wherein said board-fixing member (320) is made out of resilient material, and provided with flexible arms (335), adapted to deflect reversibly for filling up the gap between the board and wall (20).

9. The electrical mounting device (300) for mounting an electrical installation box (30) as claimed in claim 8, wherein said board-fixing member (320) is engaged with an adjustment fixture (336), made out of resilient material and configured to deflect reversibly, when pushed against the board in order to fill in the gap between the wall (20) and the board.

10. The electrical mounting device (100,300) for mounting an electrical installation box (30) as claimed in claim 1 or any of claims 7 to 9, wherein the locking portions (123,323) provided with the first surface (121,321) of said board-fixing member (120,320) are pivotally mounted on a distal edge of said first surface (121,321) and extending therefrom to removably engage with the receiving means (34,35) on the mating surface (32) of said electrical installation box (30) or with the receiving means (126,326) extending from a distal edge of the second surface (122,322) of said board-fixing member (120,320).

11. The electrical mounting device (100,300) for mounting an electrical installation box (30) as claimed in claim 10, wherein said locking portions (123,323), provided on the first surface (121,321) of said board-fixing member (120,320), are disengaged from the receiving means (34,35,126,326) by compressing a lifting arm (134,334) provided on the opposite end of said locking portions (123,323), mounted by pivot (133,333) on a distal edge of said first surface (121,321).

12. The electrical mounting device (100) for mounting an electrical installation box (30) as claimed in claim 11, wherein gripping means (135) are disposed at top surface of each of said lifting arms (134) to facilitate a fictional attachment and detachment of said locking portion (123) such that a predetermine force is required to detach said board-fixing member (120).

13. The electrical mounting device (100,200,300) for mounting an electrical installation box (30) as claimed in any of the above claims 1 to 12, wherein said second surface (122,222,222', 322) of said board-fixing member (120,220,220', 320) is provided with guiding slots (124, 224) to receive guiding projections (125,225) provided on the first surface (121,221,221', 321) of said board-fixing member (120,220,220', 320) for docking multiple board-fixing members.

14. The electrical mounting device (100,200,300) for mounting electrical installation box (30) as claimed in any of the above claims 1 to 13, wherein fastener receiving slots (139) are provided at the second surface (122,222,222',322) of said board-fixing member (120,220,220',320) for nailing/screwing with the board and hold said electrical installation box (30) robust.

15. The electrical mounting device (100,200,300) for mounting an electrical installation box (30) as claimed in any of the above claims 1 to 14, wherein the first surface (121,221,221',321) and second surface (122,222,222',322) of said board-fixing member (120,220,220',320) is plane-shaped for gluing with the wall (20) and/or mating surface (32) of said electrical installation box (30).

16. A ganged modular electrical installation box (50-1, 50-2, 50-3, 50-4) comprising a ganged lid member, a threaded ring assembly and an electrical mounting device (100,200,300), wherein said electrical mounting device (100,200,300) is as claimed in any of the above claims 1 to 15.

## Patentansprüche

1. Elektrische Montagevorrichtung (100,200,300) zum Montieren einer elektrischen Installationsbox (30), umfassend
- mindestens ein Plattenfixierungsbauteil (120,220,220',320), das eine erste Oberfläche (121, 221, 221', 321) und eine zweite Oberfläche (122, 222, 222', 322) aufweist;
- ein Höhenverstellbauteil (128); und
- einen elektrischen Installationskasten (30), der eine Passoberfläche (32) aufweist, die mit Aufnahmemitteln (34,35) an einem distalen Teil der Passoberfläche (32) versehen ist, um mit dem Plattenfixierungsbauteil (120, 220, 220', 320) lösbar in Eingriff zu treten,
wobei die erste Oberfläche (121, 221, 221', 321) mit Verriegelungsabschnitten (123, 223, 323) versehen ist, um mit mindestens einem der Aufnahmemittel (34,35,46) lösbar in Eingriff zu treten, die auf der Passoberfläche (32) des elektrischen Installationskastens (30) bereitgestellt sind; und
wobei die zweite Oberfläche (122, 222, 222', 322) versehen ist mit
- Aufnahmemitteln (126,226,326), um mit einem anderen Plattenfixierungsbauteil (140,240,240',340) zum Ausfüllen des Spalts zwischen Platte und Wand (20) lösbar in Eingriff zu treten, um den elektrischen Installationskasten (30) zu montieren; und
- Kopplungsbauteilen (136), die an der zweiten Oberfläche (122) lösbar angebracht sind, um ein angrenzendes Kopplungsbauteil (136) für eine vertikale und/oder horizontale Ausrichtung angrenzender Plattenfixierungsbauteile (120) zu berühren und dadurch eine vordefinierte Teilung und einen vordefinierten Abstand zwischen angrenzenden Installationskästen (30) aufrechtzuerhalten,
**dadurch gekennzeichnet, dass**
- die Verriegelungsabschnitte (123,223,323) in Form von hakenförmigen Bauteilen (123) sind, die an distalen Kanten der ersten Oberfläche (121) schwenkbar montiert sind,
- das Plattenfixierungsbauteil (120) mit einem Aufnahmeloch (127) in der Mitte der zweiten Oberfläche (122) zum Ineingrifftreten mit dem Höhenverstellbauteil (128) versehen ist, wobei das Höhenverstellbauteil (128) umfasst:
- ein Montagehalterungsbauteil (129), das mit Befestigungselementaufnahmemitteln (130), um das Höhenverstellbauteil (128) an der Wand (20) zu montieren, und einem Gewindeaufnahmeschlitz (131) versehen ist;
- und ein Stangenbauteil (132), das spiralförmige Nuten aufweist, wobei ein Ende des Stangenbauteils (132) mit dem Aufnahmeloch (127), das in dem Plattenfixierungsbauteil (120) versehen ist, lösbar in Eingriff steht und ein anderes Ende mit dem Gewindeaufnahmeschlitz (131) des Montagehalterungsbauteils (129) lösbar in Eingriff steht, um das Stangenelement (132) zu drehen und dadurch die Höhe des elektrischen Installationskastens (30) zu verstellen.

2. Elektrische Montagevorrichtung (200) zum Montieren eines elektrischen Installationskastens (30) nach Anspruch 1, wobei die elektrische Montagevorrichtung (200) zwei Plattenfixierungsbauteile (220, 220') umfasst, wobei jedes der Plattenfixierungsbauteile (220, 220') mehr als eine Passoberfläche (221, 221) mit ungleichen Abmessungen aufweist, wobei jede der Passoberflächen (221, 221') mit Verriegelungsvorsprüngen (223) versehen ist, um mit den Aufnahmemitteln (46) an dem elektrischen Installationskasten (30) und/oder mit den Aufnahmemitteln (226) an den gegenüberliegenden Oberflächen (222, 222') der Passoberflächen (221, 221') eines anderen Plattenfixierungsbauteils (240, 240') lösbar in Eingriff zu treten.

3. Elektrische Montagevorrichtung (200) zum Montieren eines elektrischen Installationskastens nach Anspruch 2, wobei die Verriegelungsvorsprünge (223) Kragarmschnappverbindungen sind, die durch Komprimieren der Schnappverbindungen, um reversibel auszulenken und sich von den Aufnahmemitteln (226,46) abnehmen zu lassen, von den Aufnahmemitteln (226,46) gelöst werden können.

4. Elektrische Montagevorrichtung (200) zum Montieren eines elektrischen Installationskastens (30) nach einem der vorstehenden Ansprüche 2 und 3, wobei das Plattenfixierungsbauteil (220) die Form eines rechteckigen Prismas hat.

5. Elektrische Montagevorrichtung (200) zum Montieren eines elektrischen Installationskastens (30) nach einem der vorstehenden Ansprüche 2 und 3, wobei das Plattenfixierungsbauteil die Form eines sechseckigen Prismas hat.

6. Elektrische Montagevorrichtung (200) zum Montieren eines elektrischen Installationskastens (30) nach einem der vorstehenden Ansprüche 2 bis 5, wobei die Plattenfixierungsbauteile (220, 220') mit Verstärkungsrippen (229) versehen sind, die entlang einer Achse (51) der Plattenfixierungsbauteile (220, 220') angeordnet sind.

7. Elektrische Montagevorrichtung (100) zum Montieren eines elektrischen Installationskastens (30) nach Anspruch 1, wobei das Aufnahmeloch (127) zum Ineingrifftreten mit dem Stangenbauteil (132) eine kreisförmige Form hat und das Stangenbauteil (132) in das Aufnahmeloch (127) eingepresst ist.

8. Elektrische Montagevorrichtung (300) zum Montieren eines elektrischen Installationskastens (30) nach Anspruch 1, wobei das Plattenfixierungsbauteil (320) aus elastischem Material hergestellt ist und mit flexiblen Armen (335) versehen ist, die angepasst sind, um zum Ausfüllen des Spalts zwischen der Platte und der Wand (20) reversibel auszulenken.

9. Elektrische Montagevorrichtung (300) zum Montieren eines elektrischen Installationskastens (30) nach Anspruch 8, wobei das Plattenfixierungsbauteil (320) mit einer Einstelleinrichtung (336) in Eingriff steht, die aus elastischem Material hergestellt und konfiguriert ist, um reversibel auszulenken, wenn sie gegen die Platte gedrückt wird, um den Spalt zwischen der Wand (20) und der Platte zu füllen.

10. Elektrische Montagevorrichtung (100, 300) zum Montieren eines elektrischen Installationskastens (30) nach Anspruch 1 oder einem der Ansprüche 7 bis 9, wobei die Verriegelungsabschnitte (123, 323), die mit der ersten Oberfläche (121, 321) des Plattenfixierungsbauteils (120, 320) versehen sind, an einer distalen Kante der ersten Oberfläche (121, 321) schwenkbar montiert sind und sich von dort erstrecken, um mit den Aufnahmemitteln (34, 35) an der Passoberfläche (32) des elektrischen Installationskastens (30) oder mit den Aufnahmemitteln (126, 326), die sich von einer distalen Kante der zweiten Oberfläche (122, 322) des Plattenfixierungsbauteils (120, 320) erstrecken, lösbar in Eingriff zu treten.

11. Elektrische Montagevorrichtung (100, 300) zum Montieren eines elektrischen Installationskastens (30) nach Anspruch 10, wobei die Verriegelungsabschnitte (123, 323), die auf der ersten Oberfläche (121, 321) des Plattenfixierungsbauteils (120, 320) bereitgestellt sind, von den Aufnahmemitteln (34, 35, 126, 326) durch Komprimieren eines Hebearms (134, 334) gelöst werden, der an dem gegenüberliegenden Ende der Verriegelungsabschnitte (123, 323) bereitgestellt, durch einen Schwenkzapfen (133, 333) an einer distalen Kante der ersten Oberfläche (121, 321) montiert ist.

12. Elektrische Montagevorrichtung (100) zum Montieren eines elektrischen Installationskastens (30) nach Anspruch 11, wobei Greifmittel (135) an der oberen Oberfläche jedes der Hebearme (134) angeordnet sind, um eine fiktionale Anbringung und Lösung des Verriegelungsabschnitts (123) derart zu erleichtern, dass eine vorbestimmte Kraft erforderlich ist, um das Plattenfixierungsbauteil (120) zu lösen.

13. Elektrische Montagevorrichtung (100, 200, 300) zum Montieren eines elektrischen Installationskastens (30) nach einem der vorstehenden Ansprüche 1 bis 12, wobei die zweite Oberfläche (122, 222, 222', 322) des Plattenfixierungsbauteils (120, 220, 220', 320) mit Führungsschlitzen (124, 224) versehen ist, um Führungsvorsprünge (125, 225) aufzunehmen, die auf der ersten Oberfläche (121, 221, 221', 321) des Plattenfixierungsbauteils (120, 220, 220', 320) zum Andocken mehrerer Plattenfixierungsbauteile bereitgestellt sind.

14. Elektrische Montagevorrichtung (100, 200, 300) zum Montieren eines elektrischen Installationskastens (30) nach einem der vorstehenden Ansprüche 1 bis 13, wobei Befestigungselementaufnahmeschlitze (139) an der zweiten Oberfläche (122, 222, 222', 322) des Plattenfixierungsbauteils (120, 220, 220', 320) zum Nageln/Schrauben mit der Platte und um den elektrischen Installationskasten (30) robust zu halten bereitgestellt sind.

15. Elektrische Montagevorrichtung (100,200,300) zum Montieren eines elektrischen Installationskastens (30) nach einem der vorstehenden Ansprüche 1 bis 14, wobei die erste Oberfläche (121, 221, 221', 321) und zweite Oberfläche (122, 222, 222', 322) des Plattenfixierungsbauteils (120, 220, 220', 320) ebenförmig zum Verkleben mit der Wand (20) und/oder der Passoberfläche (32) des elektrischen Installationskastens (30) ist.

16. Gekuppelter modularer elektrischer Installationskasten (50-1, 50-2, 50-3, 50-4), umfassend ein gekuppeltes Deckelbauteil, eine Gewinderingbaugruppe und eine elektrische Montagevorrichtung (100, 200, 300), wobei die elektrische Montagevorrichtung (100, 200, 300) nach einem der vorstehenden Ansprüche 1 bis 15 ist.

## Revendications

1. Dispositif de montage électrique (100, 200, 300) permettant le montage d'un boîtier d'installation électrique (30), comprenant
- au moins un élément de fixation de plaque (120, 220, 220', 320) présentant une première surface (121, 221, 221', 321) et une seconde surface (122, 222, 222', 322) ;
- un élément de réglage de hauteur (128) ; et
- un boîtier d'installation électrique (30) présentant une surface de contact (32) pourvue de moyens de réception (34, 35) au niveau de la partie distale de ladite surface de contact (32) pour venir en prise de manière amovible avec ledit élément de fixation de plaque (120, 220, 220', 320),
dans lequel ladite première surface (121, 221, 221', 321) est pourvue de sections de verrouillage (123, 223, 323) destinées à venir en prise de manière amovible avec au moins l'un parmi lesdits moyens de réception (34, 35, 46) prévus sur la surface de contact (32) dudit boîtier d'installation électrique (30) ; et
dans lequel ladite seconde surface (122, 222, 222', 322) est pourvue
- de moyens de réception (126, 226, 326) destinés à venir en prise de manière amovible avec un autre élément de fixation de plaque (140, 240, 240', 340) afin de combler l'espace entre la plaque et le mur (20) pour monter le boîtier d'installation électrique (30) ; et
- d'un élément d'accouplement (136) fixé de manière libérable à ladite seconde surface (122) et destiné à entrer en contact avec un élément d'accouplement adjacent (136) pour un alignement vertical et/ou horizontal d'éléments de fixation de plaque adjacents (120) et maintenir de ce fait un pas et un espacement prédéfinis entre des boîtiers d'installation adjacents (30), **caractérisé en ce que**
- lesdites sections de verrouillage (123, 223, 323) sont sous la forme d'éléments en forme de crochet (123) montés de manière pivotante sur des bords distaux de ladite première surface (121),
- ledit élément de fixation de plaque (120) est pourvu d'un trou de réception (127) au centre de ladite seconde surface (122) pour venir en prise avec l'élément de réglage de hauteur (128), dans lequel ledit élément de réglage de hauteur (128) comprend :
- un élément de support de montage (129) pourvu d'un moyen de réception d'organe de fixation (130) permettant de monter ledit élément de réglage de hauteur (128) sur le mur (20) et d'une fente de réception filetée (131) ;
- et un élément polaire (132) présentant des rainures hélicoïdales, dans lequel une extrémité de l'élément polaire (132) est mise en prise de manière amovible avec ledit trou de réception (127) prévu dans ledit élément de fixation de plaque (120), et une autre extrémité est mise en prise de manière amovible avec la fente de réception filetée (131) dudit élément de support de montage (129) pour faire tourner ledit élément polaire (132) et régler de ce fait le niveau du boîtier d'installation électrique (30).

2. Dispositif de montage électrique (200) permettant le montage d'un boîtier d'installation électrique (30) selon la revendication 1, dans lequel ledit dispositif de montage électrique (200) comprend deux éléments de fixation de plaque (220, 220'), dans lequel chacun desdits éléments de fixation de plaque (220, 220') présente plus d'une surface de contact (221, 221) de dimension inégale, dans lequel chacune desdites surfaces de contact (221, 221') est pourvue de protubérances de verrouillage (223) destinées à venir en prise de manière amovible avec le moyen de réception (46) sur ledit boîtier d'installation électrique (30) et/ou avec le moyen de réception (226) sur les surfaces opposées (222, 222') desdites surfaces de contact (221, 221') d'un autre élément de fixation de plaque (240, 240').

3. Dispositif de montage électrique (200) permettant le montage d'un boîtier d'installation électrique selon la revendication 2, dans lequel lesdites protubérances de verrouillage (223) sont des encliquetages en porte-à-faux qui peuvent être désaccouplés desdits moyens de réception (226, 46) en comprimant lesdits encliquetages pour qu'ils s'écartent de manière réversible et se détachent des moyens de réception (226, 46).

4. Dispositif de montage électrique (200) permettant le montage d'un boîtier d'installation électrique (30) selon l'une quelconque des revendications 2 et 3 précédentes, dans lequel ledit élément de fixation de plaque (220) est sous la forme d'un prisme rectangulaire.

5. Dispositif de montage électrique (200) permettant le montage d'un boîtier d'installation électrique (30) selon l'une quelconque des revendications 2 et 3 précédentes, dans lequel ledit élément de fixation de plaque est sous la forme d'un prisme hexagonal.

6. Dispositif de montage électrique (200) permettant le montage d'un boîtier d'installation électrique (30) selon l'une quelconque des revendications 2 à 5 précédentes, dans lequel les éléments de fixation de plaque (220, 220') sont pourvus de nervures de renforcement (229) disposées le long d'un axe (51) desdits éléments de fixation de plaque (220, 220').

7. Dispositif de montage électrique (100) permettant le montage d'un boîtier d'installation électrique (30) selon la revendication 1, dans lequel ledit trou de réception (127) destiné à venir en prise avec ledit élément polaire (132) est de forme circulaire et ledit élément polaire (132) est ajusté par pression dans ledit trou de réception (127).

8. Dispositif de montage électrique (300) permettant le montage d'un boîtier d'installation électrique (30) selon la revendication 1, dans lequel ledit élément de fixation de plaque (320) est constitué d'un matériau élastique, et pourvu de bras flexibles (335) conçus pour s'écarter de manière réversible afin de combler l'espace entre la plaque et le mur (20).

9. Dispositif de montage électrique (300) permettant le montage d'un boîtier d'installation électrique (30) selon la revendication 8, dans lequel ledit élément de fixation de plaque (320) est en prise avec un accessoire de réglage (336) fabriqué à partir de matériau élastique et conçu pour se déformer de manière réversible lorsqu'il est poussé contre la plaque afin de remplir l'espace entre le mur (20) et la plaque.

10. Dispositif de montage électrique (100, 300) permettant le montage d'un boîtier d'installation électrique (30) selon la revendication 1 ou l'une quelconque des revendications 7 à 9, dans lequel les sections de verrouillage (123, 323) pourvues de la première surface (121, 321) dudit élément de fixation de plaque (120, 320) sont montées de manière pivotante sur un bord distal de ladite première surface (121, 321) et s'étendant à partir de celui-ci pour venir en prise de manière amovible avec les moyens de réception (34, 35) sur la surface de contact (32) dudit boîtier d'installation électrique (30) ou avec les moyens de réception (126, 326) s'étendant à partir d'un bord distal de la seconde surface (122, 322) dudit élément de fixation de plaque (120, 320).

11. Dispositif de montage électrique (100, 300) permettant le montage d'un boîtier d'installation électrique (30) selon la revendication 10, dans lequel lesdites sections de verrouillage (123, 323), prévues sur la première surface (121, 321) dudit élément de fixation de plaque (120, 320), sont désaccouplées des moyens de réception (34, 35, 126, 326) par compression d'un bras de levage (134, 334) prévu sur l'extrémité opposée desdites sections de verrouillage (123, 323) montées par pivot (133, 333) sur un bord distal de ladite première surface (121, 321).

12. Dispositif de montage électrique (100) permettant le montage d'un boîtier d'installation électrique (30) selon la revendication 11, dans lequel des moyens de préhension (135) sont disposés sur la surface supérieure de chacun desdits bras de levage (134) pour faciliter une fixation et un détachement fictifs de ladite section de verrouillage (123) de telle sorte qu'une force prédéterminée est nécessaire pour détacher ledit élément de fixation de plaque (120).

13. Dispositif de montage électrique (100, 200, 300) permettant le montage d'un boîtier d'installation électrique (30) selon l'une quelconque des revendications 1 à 12 précédentes, dans lequel ladite seconde surface (122, 222, 222', 322) dudit élément de fixation de plaque (120, 220, 220', 320) est pourvue de fentes de guidage (124, 224) pour recevoir des parties saillantes de guidage (125, 225) prévues sur la première surface (121, 221, 221', 321) dudit élément de fixation de plaque (120, 220, 220', 320) pour l'amarrage de multiples éléments de fixation de plaque.

14. Dispositif de montage électrique (100, 200, 300) permettant le montage de boîtier d'installation électrique (30) selon l'une quelconque des revendications 1 à 13 précédentes, dans lequel des fentes de réception d'organe de fixation (139) sont prévues au niveau de la seconde surface (122, 222, 222', 322) dudit élément de fixation de plaque (120, 220, 220', 320) pour le clouage/vissage avec la plaque et maintenir ledit boîtier d'installation électrique (30) ferme.

15. Dispositif de montage électrique (100, 200, 300) permettant le montage d'un boîtier d'installation électrique (30) selon l'une quelconque des revendications 1 à 14 précédentes, dans lequel la première surface (121, 221, 221', 321) et la seconde surface (122, 222, 222', 322) dudit élément de fixation de plaque (120, 220, 220', 320) sont de forme plane pour coller au mur (20) et/ou à la surface de contact (32) dudit boîtier d'installation électrique (30).

16. Boîtier d'installation électrique modulaire regroupé (50-1, 50-2, 50-3, 50-4) comprenant un élément de couvercle groupé, un ensemble bague à filetage et un dispositif de montage électrique (100, 200, 300), dans lequel ledit dispositif de montage électrique (100, 200, 300) est tel que revendiqué dans l'une quelconque des revendications 1 à 15 précédentes.
